# EUROPÄISCHE PATENTANMELDUNG

(11) **EP 0 671 678 A1**
(43) Veröffentlichungstag der Anmeldung: **13.09.1995**
(21) Anmeldenummer: 95103179.8
(22) Anmeldetag: 06.03.1995
(51) Int. Cl.: G05B 19/409, G06F 9/44

(54) **Projektierbare Bedienoberfläche**

(30) Priorität: 09.03.1994 DE 4407930; 11.03.1994 DE 4408299; 11.03.1994 DE 4408308
(71) Anmelder: SIEMENS AKTIENGESELLSCHAFT, D-80333 München (DE)
(72) Erfinder: von dem Bach, Armin, Dipl.-Ing., D-91054 Erlangen (DE); Knepper, Achim, Dipl.-Ing., D-91126 Schwabach (DE); Jebenstreit, Rolf, Dipl.-Ing., D-91058 Erlangen (DE)

(57) **Zusammenfassung**

Um den Anforderungen von technologisch orientierten Benutzern an Bedienoberflächen in allen Einzelfällen gerecht zu werden, wird die Möglichkeit eingeführt, Bedienhandlungen über programmierbare Funktionstasten auszuführen, sowie beliebige Anwenderformulare und Zustandszeilen mit Hilfe einer Beschreibungssprache in Form von Bedienkommandosequenzen (BKS) zu hinterlegen. Bedienkommandosequenzen (BKS) setzen sich aus Bedienkommandolisten (BKL) zusammen, welche selbst aus einer Folge von Bedienkommandos (BK) bestehen. Bedienkommandos sind entweder Dialogschnittstellenkommandos oder ein Zugriff auf fest verdrahtete Funktionalitäten der der Bedienoberfläche zugrundeliegenden Hardwareplattform. Jede Bedienkommandosequenz (BKS) wird solange bearbeitet, bis entweder eine ihrer Bedienkommandoliste (BKL) vollständig bearbeitet ist und das letzte Bedienkommando (BK) ein korrektes Ergebnis liefert oder keine Bedienkommandolisten (BKL) mehr folgt oder ein Abbruch aufgrund eines Fehlers oder eines Abbruchkommandos erfolgt. Für die Bearbeitung der Bedienkommandosequenzen (BKS) werden Variablen verwendet, die durch Benutzung erzeugt werden. Diese Variablen werden überwacht und abhängig von Wertänderungen beliebige Bedienkommandosequenzen (BKS) aktiviert. Durch eine Wertänderung ausgelöste Ereignisse werden nur dann bearbeitet, wenn nicht das gleiche Ereignis bereits zur Bearbeitung ansteht.

## Beschreibung

Die Anforderungen von technologisch orientierten Benutzern und Kunden an die Bedienoberflache von beispielsweise Steuerungen für Werkzeugmaschinen und Roboter sind stark abhängig von applikationsspezifischen Gegebenheiten. Neue Anwender von Steuerungen bringen daher beständig neue Anforderungen an die Bedienoberflache der Steuerung ein. Werden diese Anforderungen in die Systemsoftware und Steuerung integriert, so ergibt sich ein hoher logistischer Aufwand für die Erzeugung, die Wartung und Pflege unterschiedlicher Softwarebestände beim Steuerungshersteller. Darüber hinaus benötigt der Anwender stets die Hilfe des Systemsoftwareentwicklers, um seine Anforderung zu realisieren. Aus diesem Grund ist er in seiner Reaktionsfähigkeit stark eingeschränkt.

Aus diesem Grund müssen universelle Steuerungen eine Vielzahl von verschiedenen Technologien, wie beispielsweise Drehen, Fräsen, Schweißen, Kleben und Lackieren abdecken. Jede dieser Technologien hat eigene Verfahren und Anforderungen an die Bedienoberfläche einer Steuerung. Dabei sollen alle wichtigen technologischen Bedienhandlungen möglichst einfach mittels Funktionstasten ausgeführt werden können. Die Anzahl der für eine Tätigkeit notwendigen Tastendrucke stellt dabei hinsichtlich der Akzeptanz ein entscheidendes wirtschaftliches Kriterium dar.

Es ist bekannt, daß viele Hersteller das Problem herkömmlicherweise durch speziell auf eine Technologie zugeschnittene Steuerungen lösen, deren Bedienung aber festgelegt ist. Das Verfahren ist dabei strickt vorgegeben und muß vom Kunden so akzeptiert werden, wie es ist. Im Bereich der numerischen Steuerung für Werkzeugmaschinen stehen dem Anwender bei herkömmlichen Steuerungen eigene Programmpakete zur Verfügung, die es ermöglichen, anwenderspezifische Menüs an definierten Stellen im Systemmenübaum zu plazieren.

Vom Einsatz in wissenschaftlichen Taschenrechnern ist bekannt, daß dort herkömmlicherweise Funktionstasten existieren, welche mit fest vorgegebenen oder selbstprogrammierten Funktionen durch den Anwender belegt werden können (Hewlett Packard HP28S, Bedienungshandbuch, 1988).

Die genannten standardgemäßen Bedienoberflächen besitzen somit den Nachteil, daß sie größtenteils unflexibel sind, in dem sie die Kunden vor eine fest vorgegebene Auswahl von Funktionen und Menüs stellen. Andere Benutzeroberflächen ermöglichen zwar die Erweiterung des vorhandenen Menübaumes, jedoch ist damit keine Möglichkeit zu einer grundsätzlichen Konzeption einer auf die Bedürfnisse des Anwenders zugeschnittenen Bedienoberfläche möglich. Eine solche umfassende Anpassung der Bedienoberfläche bei beispielsweise Werkzeugmaschinensteuerungen an die Bedürfnisse des Kunden ist bisher aus sicherheitstechnischen Überlegungen nicht realisierbar, weil Fehler bei der Erstellung der Bedienoberfläche erhebliche Auswirkungen auf die Abläufe an der durch die Bedienoberfläche gesteuerten z.B. Werkzeugmaschine haben.

Der Erfindung liegt daher die Aufgabe zugrunde, eine projektierbare Bedienoberfläche zu schaffen, welche an die technologischen Anforderungen des jeweiligen Benutzers angepaßt werden kann. Die Bedienoberfläche soll über Funktionstasten gesteuert werden, welche mit technologieabhängigen Funktionen vom jeweiligen Benutzer belegt werden können. Gleichzeitig soll ein Verfahren zur Programmierung von beliebigen Anwenderformularen und Zustandszeilen entsprechend den jeweiligen Anforderungen des Benutzers ermöglicht werden. Dabei soll der vor allem auf dem Gebiet von Steuerung für Werkzeugmaschinen und Roboter besonders sensible Aspekt der Sicherheit besonders beachtet werden, indem trotz vielfältiger Eingriffsmöglichkeiten des Bedieners die Gestaltung der Bedienoberfläche die erforderlichen Sicherheitsaspekte auch bei eventueller Fehlbedienung bzw. Fehlprogrammierung gewährleistet bleiben.

Gemäß der Erfindung wird diese Aufgabe durch ein Verfahren zur Gestaltung projektierbarer Bedienoberflächen mit folgenden Merkmalen gelöst:
1.1 Bedienhandlungen werden über programmierbare Funktionstasten ausgeführt,
1.2 jeder Funktionstaste wird eine Bedienkommandosequenz zugeordnet, welche in einer oder mehreren Dateien abgelegt wird, die bevorzugterweise editierbar sind,
1.3 beliebige Anwenderformulare und Zustandszeilen werden mit Hilfe einer Beschreibungssprache in Form von Bedienkommandosequenzen beschrieben und in einer oder mehreren Dateien hinterlegt, die bevorzugterweise editierbar sind,
1.4 jede Bedienkommandosequenz setzt sich aus einer oder mehreren Bedienkommandolisten zusammen, welche selbst aus einer Folge von ein oder mehreren Bedienkommandos besteht,
1.5 ein Bedienkommando ist entweder ein Dialogschnittstellenkommando, ein Zugriff auf festverdrahtete Funktionalitäten einer der Bedienoberfläche zugrund liegenden Hardware-Plattform oder das Ergebnis einer vorhergehenden Bedienkommandosequenz,
1.6 die Bearbeitung einer Bedienkommandosequenz wird durch ein Ereignis wie beispielsweise Benutzereingaben, Wertänderungen von Systemvariablen und/oder Bedienvariablen oder Funktionstastenbetätigungen ausgelöst, welches frei definierbar ist,
1.7 jede Bedienkommandosequenz wird solange bearbeitet, bis entweder eine ihrer Bedienkommandolisten vollständig bearbeitet ist und das letzte Bedienkommando ein korrektes Ergebnis liefert oder keine Bedienkommandoliste mehr folgt oder ein Abbruch aufgund eines Fehlers oder eines Abbruchkommandos erfolgt.

Um die Vielfalt der Gestaltungsmöglichkeiten des erfindungsgemäßen Verfahren zu erweitern und die Projektierung einer auf die Bedürfnisse des Anwenders zugeschnittenen Bedienoberfläche möglichst einfach zu gestalten, verwendet eine erste vorteilhafte Ausführung des Verfahrens folgende Merkmale:
2.1 zur Bearbeitung der Bedienkommandosequenzen werden lokale Variablen und/oder globale Variablen und/oder exportierte Variablen und/oder modulspezifische Variablen und/oder Umgebungsvariablen verwendet,
2.2 alle Variablen sind in ihrem Gültigkeitsbereich änderbar,
2.3 alle Variablen werden durch ihre Benutzung erzeugt, so daß keine vorherige Deklaration der Variablen erforderlich ist.

Um die Einflußnahmemöglichkeiten des Bedieners auf seine gewünschte Bedienoberfläche möglichst groß zu gestalten und dem Benutzer zusätzlich die Möglichkeit zu geben, die Bedienoberfläche an bestimmte Systemzustände anzupassen, bzw. Reaktionen abhängig von Systemzuständen auzulösen, besitzt eine weitere vorteilhafte Ausgestaltung folgende Merkmale:
3.1 die Bedienkommandosequenzen führen Abfragen und Vergleiche durch, indem Variablen mit Hilfe einer im System vorhandenen Dialogschnittstelle gelesen und geschrieben werden,
3.2 die Suchreihenfolge für Variablen bei der Bearbeitung beginnt bei formularspezifischen Variablen und verläuft über zustandszeilenspezifische Variablen, bedienkommandospezifischen Variablen zu allegmeinen, immer vorhandenen Variablen.

Um eine möglichst einfache Kommunikation zwischen Bediener und Bedienoberfläche zu ermöglichen, verwendet eine weitere vorteilhafte Ausgestaltung folgende Merkmale:
4.1 es werden Ein-/Ausgabefelder sowie reine Ausgabefelder definiert,
4.2 Ein- und Ausgabefelder werden in den systemprojektierten Formularen editiert,
4.3 Ein- und Ausgabefelder werden wie Bedienvariablen verwaltet,
4.4 Ein- und Ausgabefelder werden über symbolische Namen gelesen und geschrieben,
4.5 zur Vereinfachung der Erstellung von Bedienkommandosequenzen werden Makros definiert, die bei der Interpretation der Bedienkommandosequenzen eingesetzt werden.

Um eine möglichst effektive Zusammenarbeit der vom Bediener gestalteten Bedienoberfläche und der darunterliegenden Hardwareplattform, beispielsweise einer numerischen Steuerung für Werkzeugmaschinen, zu ermöglichen, verwendet eine weitere vorteilhafte Ausgestaltung des erfindungsgemäßen Verfahrens folgende Merkmale:
5.1 Systemvariablen werden auf Änderung überwacht, indem immer dann, wenn eine Wertänderung auftritt, dieser Wert einer Überwachungsvariablen zugewiesen wird, wodurch ein Ereignis ausgelöst wird,
5.2 zur Überwachung von Bedienvariablen auf Änderung werden Abhängigkeiten zwischen Wertänderung in den Bedienvariablen und damit verbundenen Ereignissen festgelegt,
5.3 jede Wertänderung in der angegebenen Bedienvariablen führt dazu, daß das zugeordnete Ereignis ausgeführt wird,
5.4 eine Variable löst ein oder mehrere Ereignisse aus,
5.5 anstehende Ereignisse werden nacheinander abgearbeitet,
5.6 durch eine Wertänderung ausgelöste Ereignisse werden nur dann bearbeitet, wenn nicht das gleiche Ereignis bereits zur Bearbeitung ansteht.

Eine weitere vorteilhafte Ausgestaltung des erfindungsgemäßen Verfahrens gewährleistet trotz vielfältiger Eingriffmöglichkeiten des Benutzers in die Gestaltung einer auf seiner Bedürfnisse zugeschnittenen Bedienoberfläche, daß in der jeweiligen Hardwareplattform eingesetzte Sicherheitskonzepte durch Fehlbedienung nicht außer Kraft gesetzt werden. Diese vorteilhafte Ausgestaltung besitzt folgende Merkmale:
6.1 Bedienkommandos (BK) werden direkt von dem Interpreter der unter der Bedienoberfläche liegenden Hardware-Plattform ausgeführt,
6.2 die Prüfung von Zustandsänderungen von Variablen erfolgt ebenfalls im Interpreter der unter der Bedienoberfläche liegenden Hardware-Plattform.

In einer weiteren vorteilhaften Ausgestaltung der vorliegenden Erfindung wird der Tatsache Rechnung getragen, daß viele technologieorientierte Bediener aufgrund der Mächtigkeit heute verwendeter Programmiersprachen durch deren Komplizität überfordert sind. Große Teile von Anwenderprogrammen enthalten keine oder nur wenige Informationen über den eigentlichen technologischen Prozeß und dienen hauptsächlich der Ablauflogik bzw. der syntaktischen Korrektheit. Eine der wichtigsten Forderungen an eine Bedienoberfläche ist dabei die einfache Bedienbarkeit durch technologieorientiertes Personal. Da man vermeiden will, die Mächtigkeit der verwendeten Programmiersprachen stark einzuschränken, daß nur noch die von technologieorientierten Bedienern erwarteten Informationen zur Verfügung gestellt werden, mithin dadurch primitive sehr unkomfortable Programmiersprachen entstehen würden, wird bei dem erfindungsgemäßen Verfahren ein anderer Weg eingeschlagen. Dieser ermöglicht es, die Leistungsfähigkeit vorhandener Programmiersprachen beizubehalten, bei der Visualisierung von für den Bediener erforderlichen technologischen Vorgängen jedoch eine Auswahl der Informationen vorzunehmen, welche für den Bediener von Belangen sind. Diese vorteilhafte Ausgestaltung ergänzt das Verfahren zur Projektierung von Bedienoberflächen um folgendes Merkmal:
7.1 für den Bediener nichtrelevante technologiebezogene Informationen werden aus einem jeweils zugrundeliegenden Steuerungsprogamm herausgeblendet.

Um einen Bediener durch die Gestaltung einer Bedienoberfläche eine möglichst auf seinen Einsatzzweck zugeschnittene Bedienersicht technologischer Vorgänge zu ermöglichen, erlaubt es eine weitere vorteilhafte Ausgestaltung, beliebige, frei definierbare Kommentare für technologisch relevante Teile eines verborgenen Programmstückes zu definieren. Diese Ausgestaltung besitzt folgendes Merkmal:
8.1 es werden sogenannte Block-Descriptions verwendet, die Teile eines Anwenderprogrammes verbergen und statt dessen einen frei definierbaren aussagefähigen Kommentar zur Ausgabe bringen.

Um eine Auswahl der für die technologieorientierten Bediener relevanten Informationen aus Anwenderprogrammen vornehmen zu können, insbesondere um jede Programmzeile textuell zu verändern, besitzt eine weitere Ausgestaltung folgendes Merkmal:
9.1 mit Hilfe von Filtern werden einzelne Anweisungen in Anwenderprogrammen geändert und an die Bedürfnisse des Bedieners angepaßt.

Um inkonstente Zustände beim Einfügen und Ändern in den erstellten Bedienersichten zu vermeiden, besitzt eine weitere vorteilhafte Ausgestaltung der vorliegenden Erfindung folgendes Merkmal:
10.1 zum Editieren von durch Block-Descriptions oder Filter erzeugten Bedienersichten steht eine daran angepaßte Bedienerführung zur Verfügung.

Ein Ausführungsbeispiel der Erfindung ist in den Zeichnungen dargestellt. Gleiche Elemente sind gattungsbildend mit gleichen Bezugszeichen bezeichnet, gleiche Elemente sind jedoch nicht zwangsläufig dieselben. Dabei zeigen:
- FIG 1: die Struktur einer Bedienkommandosequenz zur Hinterlegung einer vom Anwender definierten Funktionstaste,
- FIG 2: ein Ablaufdiagramm der erfindungsgemäßen Vorgehensweise zur Überwachung von System- und Bedienvariablen sowie damit verbundenes Auslösen von Ereignissen.

Um dem Anmelder Möglichkeiten zu bieten, die es ihm ermöglichen, technologieabhängige Bedienoberflächen zu gestalten, werden dem Anwender Funktionalitäten zur Hand gegeben, mit denen er einen großen Teil der Bedienoberfläche selbst gestalten kann. Dazu werden bestimmte Funktionstasten zur Verfügung gestellt, die projektiert werden können. Diese Projektierung wird erweitert, so daß der Anwender Bedienprogramme hinter den Tasten hinterlegen kann. Diese Bedienprogramme werden im folgenden als Bedienkommandosequenzen BKS bezeichnet. Die Bearbeitung einer Bedienkommandosequenz BKS wird durch ein Ereignis ausgelöst. Die Ereignisse sind beispielsweise Funktionstasten-Betätigungen, andere ausgewählte Benutzereingaben sowie vom Anwender frei definierbare Ereignisse. Daneben können Ereignisse durch Änderungen in verwendeten Variablen bedingt sein.

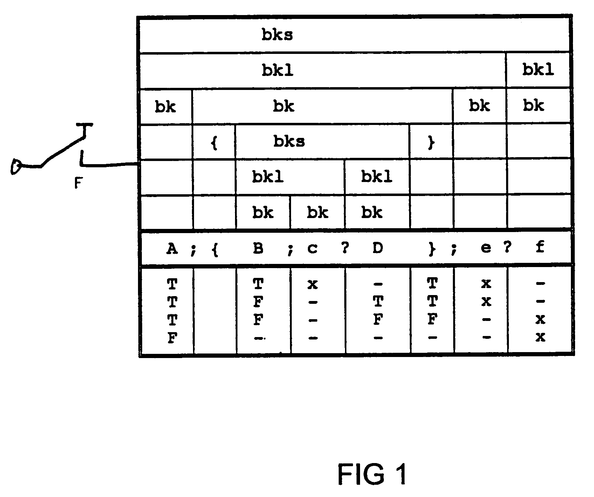

Bedienkommandosequenzen beschreiben das Verhalten, daß durch ein Ereignis ausgelöst wird. In FIG 1 ist der strukturelle Aufbau einer Bedienkommandosequenz BKS gezeigt, welche durch die Betätigung einer Funktionstaste F, die das Ereignis bedingt, ausgelöst wird. Eine Bedienkommandosequenz BKS hat folgenden Aufbau. Sie ist eine Folge von ein oder mehreren Bedienkommandolisten BKL, die durch einen Trennzeichen, beispielsweise ein '?', getrennt sind. Eine Bedienkommandoliste BKL wiederum ist eine Folge von ein oder mehreren Bedienkommandos BK, die durch ein weiteres Trennzeichen, beispielsweise ';' getrennt sind. Ein Bedienkommando BK ist entweder ein Dialogschnittstellenkommando DSS, der Zugriff auf eine fest verdrahtete Funktionalität, ein sogenanntes Builtin-Kommando oder eine geklammerte Bedienkommandosequenz BKS, welche das Ergebnis der eingeschlossenen Bedienkommandosequenz als Parameter erbt.

Jedes Bedienkommando BK liefert eines von vier Ergebnissen. Besteht das Ergebnis in einer erfüllten Bedingung, liefert somit den Wert TRUE, so wird die aktuelle Bedienkommandoliste BKL weiter bearbeitet. Liefert ein Bedienkommando BK als Ergebnis, daß eine Bedingung nicht erfüllt ist, der Wert also der Kategorie FALSE angehört, wird die aktuelle Bedienkommandoliste BKL abgebrochen und die nächste Bedienkommandoliste wird bearbeitet. Liefert ein Bedienkommando einen Fehler ERROR so wird die Bedienkommandosequenz BKS abgebrochen und das Ereignis ERROR, welches für einen Fehler steht, ausgelöst. Wird das Bedienkommando BK z.B. vom Bediener abgebrochen, also ein BREAK-Signal erzeugt, so wird die in der Ausführung befindliche Bedienkommandosequenz BKS ebenfalls abgebrochen.

Eine Bedienkommandosequenz BKS wird solange bearbeitet, bis entweder eine ihrer Bedienkommandolisten BKL vollständig bearbeitet ist und das letzte Bedienkommando BK das Ergebnis TRUE geliefert hat, bis keine Bedienkommandoliste BKL mehr folgt oder die Bedienkommandosequenz BKS durch ein Signal ERROR oder BREAK abgebrochen wird. Die Zeichnung in FIG 1 zeigt dabei im hierarchischen Aufbau die Befehlsstruktur nach dem Top-Down-Prinzip ausgehend von einer Bedienkommandosequenz BKS bis hin zu den einzelnen Bedienkommandos BK und den darin realisierten Bedingungen. Die Großbuchstaben A, B, D stellen dabei boolsche Bedingungen dar und die Kleinbuchstaben c, e, f sind Bedienkommandos, die nur TRUE, BREAK oder ERROR als Ergebnis haben. Zustände, die bearbeitet werden, sind durch 'x' gekennzeichnet. Solche Zustände, die nicht bearbeitet werden, sind durch '-' gekennzeichnet.

Die programmierbaren Funktionstasten der Bedienoberfläche werden so gestaltet, daß dazu in editierbaren Dateien einfache Programme, nämlich die Bedienkommandosequenzen BKS, hinterlegt werden. Diese Bedienkommandosequenzen BKS stellen die gesamte Funktionalität, die sich mit Bedienoberflächen realisieren läßt, bereit. Die Bedienkommandosequenzen BKS können Abfragen und Vergleiche enthalten. Unter anderem ist es möglich, alle Systemzustände wie Override, Ein- und Ausgänge, den Zustand des Bediengerätes etc. abzufragen und zu ändern. Dies geschieht durch schreiben bzw. lesen von Systemvariablen mit Hilfe einer bereits im System vorhandenen Dialogschnittstelle, vorzugsweise einer ASCII-Kommandoschnittstelle. Die Prüfung, ob solche Zustandsänderungen zulässig sind, erfolgt dabei im Interpreter dieser Bedienkommandos BK, welcher Bestandteil der zugrundeliegenden Hardwareplattform ist. Das hat zur Folge, daß ein Sicherheitskonzept, welches in der Regel in der Hardwareplattform realisiert ist und auf das der Bediener keinen direkten Einfluß hat, unangetastet und damit weiterhin gewährleistet bleibt. Der Bediener hat trotz umfangreicher Möglichkeit zur Beeinflussung und Gestaltung seiner Bedienoberfläche jederzeit die Gewährleistung, daß durch von ihm selbst erstellte Bedienerhandlungen Sicherheitsaspekte nicht durch eine fehlerhafte Gestaltung der Bedienoberfläche außer Kraft gesetzt werden.

Neben der freien Programmierung von Funktionstasten ermöglicht es das erfindungsgemäße Verfahren auch, beliebige Anwenderformulare in Zustandszeilen mit Hilfe einer Beschreibungssprache in Form von Bedienkommandosequenzen BKS zu hinterlegen. Da diese Beschreibungssprache die gleichen Bedienkommandosequenzen BKS verwendet, wie sie Funktionstasten benutzen, steht die oben beschriebene Funktionalität auch für Gestaltung von Formularen und Zustandszeilen vollständig zur Verfügung.

Für die Konfigurierung und Projektierung von Funktionstastenbelegungen, Anwenderformularen und Zustandszeilen werden bestimmte Informationen der Beschreibungssprache bzw. Bedienkommandosequenzen BKS in dem Anwender zugänglichen editierbaren Dateien abgelegt. Diese Dateien können vom Anwender kopiert werden. Mit Hilfe der beschriebenen Funktionalität ist es möglich, fast beliebige Anwenderformulare, Menübäume, Zustandszeilen sowie Funktionstasten, Funktionalitäten zu projektieren bzw. zu programmieren. Dazu enthalten die editierbaren Dateien Konfigurationsdaten, Formularbeschreibungen, Zustandszeilenbeschreibungen und Funktionstastendefinitionen. Ein Formularbeschreibungsblock enthält Verweise auf andere Blöcke, die verschiedene Aspekte des Aufbaus und der Bedienung eines Anwenderformulars regeln. Es werden sowohl Position und Eigenschaften von Feldern, als auch deren Initialisierung und die Reaktion auf Benutzereingaben festgelegt. Dabei wird dafür gesorgt, daß sich das Verhalten der Bedienung möglichst an das von den festprojektierten Verfahren bekannte anlehnt. Alle Blöcke, die zur Beschreibung eines Anwenderformulares dienen, stehen in der Regel in einer editierbaren Datei. Jedoch können in einer editierbaren Datei auch mehrere Anwenderformularbeschreibungen stehen.

In einem Zustandszeilenbeschreibungsblock werden Verweise auf andere Blöcke, die verschiedene Aspekte des Aufbaus einer Zustandszeile regeln, untergebracht. Es werden sowohl Position und Eigenschaften von Feldern, als auch deren Initialisierung und die Reaktion auf variablen Änderungen festgelegt. Ebenfalls müssen alle Blöcke, die zur Beschreibung einer Zustandszeile dienen, in einer editierbaren Datei stehen, welche jedoch auch mehrere Zustandszeilenbeschreibungen enthalten kann.

Zur Vereinfachung der Erstellung von Bedienkommandosequenzen BKS können Makros definiert werden. Solche Makros werden bei der Interpretation der Bedienkommandosequenzen BKS eingesetzt. Solche Makros werden während der Interpretation textuell in der aufrufenden Bedienkommandosequenz BKS ersetzt. Beim Ersetzen wird der Makroinhalt geklammert. Es können Parameter übergeben werden, die in Platzhalter rein textuell eingesetzt werden. Die Parameter werden dabei durch Leerzeichen getrennt. Die Suchreihenfolge von Makros innerhalb einer Formularbearbeitung oder Zustandszeilenbearbeitung läuft dergestalt ab, daß zuerst lokale Makrodefinitionen, dann globale Makrodefinitionen abgesucht werden. Innerhalb der Funktionstastenbearbeitung werden nur globale Makrodefinitionen abgesucht.

Für die Bearbeitung der Bedienkommandosequenzen BKS werden Variablen verwendet. Die Variablen werden durch Benutzung erzeugt, d.h. eine Deklaration ist nicht erforderlich. Zur Unterscheidung werden Systemvariablen und vom Bediener definierte Benutzervariablen verwendet. Variablen enthalten prinzipiell Texte, die vor der Aufbereitung des jeweiligen Bedienkommandos BK eingesetzt werden. Diese werden mit Hilfe von festverdrahteten Funktionalitäten erzeugt, gesetzt und über ihren Namen referenziert. Im Zusammenhang mit der Benutzung von systemvariablen Bedienkommandos BK kann es zu Namenskonflikten kommen. So würde z.B. beim Interpretieren der Anweisung $OV_PRO = 100 versucht, die Bedienvariable OV_PRO zu finden, und ihren Inhalt zu substituieren. Um solche Probleme lösen zu können, kann die Sonderbehandlung aller vom Bedieninterpreter benutzten Symbole durch Voranstellen eines speziellen Zeichens, beispielsweise '/', aufgehoben werden.

Bezüglich der Variablenart gibt es Unterschiede in der Funktionstastenbearbeitung, Zustandszeilenbearbeitung und der Anwenderformularbearbeitung. Zum einen existieren lokale Variablen, die grundsätzlich implizit, d.h. durch Gebrauch angelegt werden. Sie gelten nur innerhalb der Bedienkommandosequenz BKS bzw. innerhalb eines Anwenderformulares, in der sie angelegt werden. Da Makros vor der Ausführung aufgelöst werden, gelten alle dort angelegten Variablen bis zum Ende der obersten, das Makro benutzenden Bedienkommandosequenz BKS. Lokale Variablen werden auch durch Builtin-Kommandos, also festverdrahtete Funktionalitäten, erzeugt.

Daneben existieren Export-Variablen. Exportierte Variablen gelten bis zum Ende der Bearbeitung des aktuellen Benutzerformulares und aller von ihm erzeugten bzw. ihn erzeugenden Benutzerformulare. Diese sind nur innerhalb der Formularbearbeitung möglich.

Weiter existieren globale Variablen. Diese gelten jeweils bis zum erneuten Kaltstart des Systems und damit auch der Bedienoberfläche.

Daneben existieren modulspezifische Variable, die einer modulspezifischen Konfigurationsdatei abgelegt werden. Die Konfigurationsdatei ist Bestandteil des Moduls. Solche modulspezifische Variablen sind nur innerhalb der Anwenderformularbearbeitung vorgesehen.

Darüber hinaus werden Umgebungsvariable zur Verfügung gestellt. Mit diesen Variablen werden den Anwender interne Zustände der Bedienung zugänglich gemacht. Solche Variablen können gelesen werden.

Alle Variablen können in ihrem Gültigkeitsbereich geändert werden. Hinsichtlich der Suchreihenfolge für Variable werden zuerst formularspezifische dann zustandszeilenspezifische, bedienkommandospezifische und schließlich allgemeine, immer vorhandene Variablen durchsucht.

Zusätzlich werden Ein- und Ausgabefelder und reine Ausgabefelder definiert. Um die Formulierung einfacher zu machen, wird zu jedem Feld eine lokale Variable gleichen Namens verwaltet. D.h., daß ein lesender oder schreibender Zugriff auf ein Ein-/Ausgabefeld wie der entsprechende Zugriff auf eine Variable behandelt werden kann. Geschrieben wird eine Feldvariable erst durch das Verlassen des Feldes. Systemvariablen werden auf Änderungen überwacht, indem jedesmal, wenn das System eine Wertänderung meldet, dieser Wert eine Überwachungsvariable zugewiesen wird. In der Überwachungsvariablen wird das Überwachungsergebnis hinterlegt. Zur Überwachung von Bedienvariablen wird jeweils ein sogenannter TRIGGER-Block definiert, der Abhängigkeiten zwischen Wertänderungen in Bedienvariablen und dadurch auszulösenden Ereignissen festlegt. Jede Wertänderung in der angegebenen Bedienvariablen führt dazu, daß das angegebene Ereignis ausgelöst wird. Eine Variable kann dabei mehrere Ereignisse auslösen.

Das oben beschriebene Konzept zur Überwachung von System und Bedienvariablen kann jedoch zu Mengenproblemen führen. Jede mit einem Ereignis verbundene Bedienkommandosequenz BKS kann durch Schreiben von Variablen selbst wieder ein oder mehrere Ereignisse auslösen. Die anstehenden Ereignisse werden nacheinander abgearbeitet. Bei Überwachung von sich schnell ändernden Systemvariablen bzw. bei eventuellen Rekursionen, dadurch bedingt daß ein Ereignis sich selbst triggert, kann es zu einem Verarbeitungsstau kommen, der ohne entsprechende Maßnahmen schnell zum Überlauf von Systemresourcen oder zu Nachlaufeffekten wie beispielsweise dem Beenden des Verfahrens bei laufender Istwertanzeige führen kann. Da in der Regel mehrfach anstehende gleiche Ereignisse keinen Sinn machen, weil das bedeutet, daß der Wert der sie auslösenden Variable sich bereits wieder geändert hat und damit die gleichen Daten zweimal ausgewertet werden würden, werden Ereignisse, die durch den TRIGGER-Block ausgelöst werden, nur dann bearbeitet, wenn kein Ergebnis gleichen Namens zur Bearbeitung ansteht. Eine solche Prüfung auf bereits anstehende Ereignisse gleichen Namens wird für Anwenderformulare und Zustandszeilen getrennt ausgeführt. Diese erfindungsgemäße Vorgehensweise hat Konzequenzen für das Systemverhalten. Werden beispielsweise für das Schreiben einer Variablen mehrere Ereignisse getriggert, so entspricht die Reihenfolge der Abarbeitung nicht unbedingt der Reihenfolge der Definition im TRIGGER-Block. Außerdem zählen eventuelle Zähler in Ereignissen nicht, wie oft das Ereignis ausgelöst wurde, sondern lediglich wie oft es ausgeführt wurde. Zusätzlich ist zu beachten, daß vor einem Anwenderformularwechsel, insbesondere vor der Ausführung von Ereignissen wie Rückkehr aus einer abgearbeiteten Bedienkommandosequenz BKS, alle anstehenden, durch TRIGGER-Blöcke ausgelöste Ereignisse ersatzlos wegfallen. Deshalb werden bei dateiverändernden Ereignissen aktuellen Werte vorsichtshalber noch einmal gelesen, um ihre Gültigkeit zu garantieren.

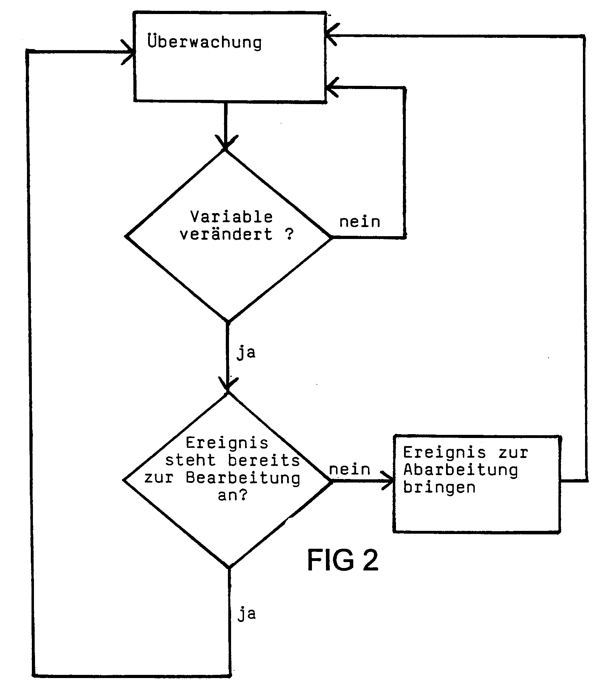

In FIG 2 ist die Überwachung und Auswertung von System- bzw. Bedienvariablen gezeigt und dargestellt, wie durch eine Wertänderung ausgelöste Ereignisse dann bearbeitet werden, wenn nicht das gleiche Ereignis bereits zur Bearbeitung ansteht.

Dadurch, daß sowohl die Systemvariablen als auch Bedienvariablen überwacht und abhängig von Wertänderungen beliebige Bedienkommandosequenzen BKS aktiviert werden, lassen sich Programme starten, Verfahrbewegungen ausführen, wobei ein Sicherheitskonzept aufgrund der Interpretation von Bedienkommandos BK im Interpreter der verwendeten Hardware-Plattform jederzeit gewährleistet ist. Außerdem können Variablen der Bedienung gesetzt und gelesen werden, so daß eigene Zustände verwaltet werden können. Dadurch ist es möglich, Teilmenübäume eines vorhandenen Systemmenübaumes, beispielsweise ein Istwertbild, aufzublenden. Ebenso lassen sich benutzerprojektierte Formulare ausblenden. Durch eine geeignete Programmierung der Funktionstasten läßt sich so u.a. eine Navigation in Menübäumen durch Simmulation von Cursertasten ermöglichen.

Um für technologieorientierte Endbenutzer eine Auswahl der in Anwenderprogrammen enthaltenen Informationen zur Visualisierung technologischer Vorgänge zu treffen, setzt das erfindungsgemäße Verfahren Mechanismen ein, die für Endbenutzer relevante Technologiedaten aus komplexen Anwendungsprogrammen herausfiltern und in beliebig aufbereiteter Form zum Ändern anbieten. Dazu werden zum einen sogenannte Block-Discriptions verwendet, welche Teile eines Anwenderprogrammes vor den Augen des Anwenders verbergen und stattdessen einen freien Kommentar ausgeben, der in der Regel die technologisch relevante Teile des verborgenen Programmstücks enthält, aber keinen vom Compiler unterstützten Bezug zum Anwendungsprogramm hat. Die in einer jeweiligen Bedienersicht ausgegebenen Kommentare sind im Zuge der Gestaltung einer projektierbaren Bedienoberfläche frei erstellbar. Das hat zur Folge, daß ein Anwendungsprogrammierteil, wie beispielsweise: DESCR PERI_STEU (PAR1**[1]**,PAR2**[1]**); Bearbeitungsphase 1
OVS = 1
OVW = 1
GLO_PERI (PAR**[1]**; PAR**[2]**)
ENDDESC
Dieser wird im Bedienermodus des Editors als
PERI_STEU (PAR1**[1]**, PAR2**[1]**); Bearbeitungsphase 2
dargestellt. Selbstverständlich kann das Anwenderprogramm zu Wartungszwecken noch vollständig dargestellt werden. Darüber hinaus ermöglichen es Filter, jede Programmzeile textuell zu verändern. Mit Hilfe dieser Filter können einzelne Anweisungen von beliebigen Anwendungsprogrammen in ihrer Darstellung beliebig geändert werden. Aus den oben gezeigten Beispiel kann dadurch resultieren:
PERI_STEU P1 = 1, P2 = 1
Die Filterbeschreibung wird für jedes Anwendungsprogramm als Textverarbeitungsscript in einer editierbaren Datei hinterlegt. Diese z.T. verkürzten Darstellungen lassen jedoch keinen normalen Editiermodus zu, da ein solches im Text zu inkonsistenten Zuständen führen würde. Aus diesem Grunde wird erfindungsgemäß zum Einfügen und Ändern eine eigene Bedienerführung zur Verfügung gestellt, die Zugriff auf das originale Anwendungsprogramm hat.

## Patentansprüche

1. Verfahren zur Gestaltung projektierbarer Bedienoberflächen, insbesondere technologieabhängiger Bedienoberflächen von Werkzeugmaschinen und Robotern, mit folgenden Merkmalen:
1.1 Bedienhandlungen werden über programmierbare Funktionstasten (F) ausgeführt,
1.2 jeder Funktionstaste (F) wird eine Bedienkommandosequenz (BKS) zugeordnet, welche in einer oder mehreren Dateien abgelegt wird, die bevorzugterweise editierbar sind,
1.3 beliebige Anwenderformulare und Zustandszeilen werden mit Hilfe einer Beschreibungssprache in Form von Bedienkommandosequenzen (BKS) beschrieben und in einer oder mehreren Dateien hinterlegt, die bevorzugterweise editierbar sind,
1.4 jede Bedienkommandosequenz (BKS) setzt sich aus einer oder mehreren Bedienkommandolisten (BKL) zusammen, welche selbst aus einer Folge von ein oder mehreren Bedienkommandos (BK) besteht,
1.5 ein Bedienkommando (BK) ist entweder ein Dialogschnittstellenkommando (DSS), ein Zugriff auf festverdrahtete Funktionalitäten einer der Bedienoberfläche zugrund liegenden Hardware-Plattform oder das Ergebnis einer vorhergehenden Bedienkommandosequenz (BKS),
1.6 die Bearbeitung einer Bedienkommandosequenz (BKS) wird durch ein Ereignis wie beispielsweise Benutzereingaben, Wertänderungen von Systemvariablen und/oder Bedienvariablen oder Funktionstastenbetätigungen ausgelöst, welches frei definierbar ist,
1.7 jede Bedienkommandosequenz (BKS) wird solange bearbeitet, bis entweder eine ihrer Bedienkommandolisten (BKL) vollständig bearbeitet ist und das letzte Bedienkommando (BK) ein korrektes Ergebnis liefert oder keine Bedienkommandoliste (BKL) mehr folgt oder ein Abbruch aufgund eines Fehlers oder eines Abbruchkommandos erfolgt.

2. Verfahren nach Anspruch 1 mit folgenden Merkmalen:
2.1 zur Bearbeitung der Bedienkommandosequenzen (BKS) werden lokale Variablen und/oder globale Variablen und/oder exportierte Variablen und/oder modulspezifische Variablen und/oder Umgebungsvariablen verwendet,
2.2 alle Variablen sind in ihrem Gültigkeitsbereich änderbar,
2.3 alle Variablen werden durch ihre Benutzung erzeugt, so daß keine vorherige Deklaration der Variablen erforderlich ist.

3. Verfahren nach einem der vorstehenden Ansprüche mit folgenden Merkmalen:
3.1 die Bedienkommandosequenzen (BKS) führen Abfragen und Vergleiche durch, indem Variablen mit Hilfe einer im System vorhandenen Dialogschnittstelle gelesen und geschrieben werden,
3.2 die Suchreihenfolge für Variablen bei der Bearbeitung beginnt bei formularspezifischen Variablen und verläuft über zustandszeilenspezifische Variablen, bedienkommandospezifischen Variablen zu allegmeinen, immer vorhandenen Variablen.

4. Verfahren nach einem der vorstehenden Ansprüche mit folgenden Merkmalen:
4.1 es werden Ein-/Ausgabefelder sowie reine Ausgabefelder definiert,
4.2 Ein- und Ausgabefelder werden in den systemprojektierten Formularen editiert,
4.3 Ein- und Ausgabefelder werden wie Bedienvariablen verwaltet,
4.4 Ein- und Ausgabefelder werden über symbolische Namen gelesen und geschrieben,
4.5 zur Vereinfachung der Erstellung von Bedienkommandosequenzen (BKS) werden Makros (M) definiert, die bei der Interpretation der Bedienkommandosequenzen (BKS) eingesetzt werden.

5. Verfahren nach einem der vorstehenden Ansprüche mit folgenden Merkmalen:
5.1 Systemvariablen werden auf Änderung überwacht, indem immer dann, wenn eine Wertänderung auftritt, dieser Wert einer Überwachungsvariablen zugewiesen wird, wodurch ein Ereignis ausgelöst wird,
5.2 zur Überwachung von Bedienvariablen auf Änderung werden Abhängigkeiten zwischen Wertänderung in den Bedienvariablen und damit verbundenen Ereignissen festgelegt,
5.3 jede Wertänderung in der angegebenen Bedienvariablen führt dazu, daß das zugeordnete Ereignis ausgeführt wird,
5.4 eine Variable löst ein oder mehrere Ereignisse aus,
5.5 anstehende Ereignisse werden nacheinander abgearbeitet,
5.6 durch eine Wertänderung ausgelöste Ereignisse werden nur dann bearbeitet, wenn nicht das gleiche Ereignis bereits zur Bearbeitung ansteht.

6. Verfahren nach einem der vorstehenden Ansprüche mit folgenden Merkmalen:
6.1 Bedienkommandos (BK) werden direkt von dem Interpreter der unter der Bedienoberfläche liegenden Hardware-Plattform ausgeführt,
6.2 die Prüfung von Zustandsänderungen von Variablen erfolgt ebenfalls im Interpreter der unter der Bedienoberfläche liegenden Hardware-Plattform.

7. Verfahren nach einem der vorstehenden Ansprüche mit folgendem Merkmal:
7.1 für den Bediener nichtrelevante technologiebezogene Informationen werden aus einem jeweils zugrundeliegenden Steuerungsprogamm herausgeblendet.

8. Verfahren nach Anspruch 7 mit folgendem Merkmal:
8.1 es werden sogenannte Block-Descriptions verwendet, die Teile eines Anwenderprogrammes verbergen und statt dessen einen frei definierbaren aussagefähigen Kommentar zur Ausgabe bringen.

9. Verfahren nach Anspruch 7 oder 8 mit folgendem Merkmal:
9.1 mit Hilfe von Filtern werden einzelne Anweisungen in Anwenderprogrammen geändert und an die Bedürfnisse des Bedieners angepaßt.

10. Verfahren nach Anspruch 7, 8 oder 9 mit folgendem Merkmal:
10.1 zum Editieren von durch Block-Descriptions oder Filter erzeugten Bedienersichten steht eine daran angepaßte Bedienerführung zur Verfügung.
